# EUROPEAN PATENT APPLICATION

(11) **EP 4 723 224 A1**
(43) Date of publication of application: **08.04.2026**
(21) Application number: 23943213.1
(22) Date of filing: 28.09.2023
(51) Int. Cl.: H01M 4/525, H01M 4/505, H01M 4/131, H01M 10/054

(54) **POSITIVE ELECTRODE MATERIAL AND PREPARATION METHOD THEREFOR, POSITIVE ELECTRODE SHEET AND SODIUM-ION BATTERY**

(30) Priority: 29.06.2023 CN 202310781322
(71) Applicant: Ningbo Ronbay New Energy Technology Co., Ltd., Yuyao Ningbo, Zhejiang 315402 (CN)
(72) Inventor: SUN, Guozheng, Ningbo, Zhejiang 315402 (CN); ZHANG, Wenfei, Ningbo, Zhejiang 315402 (CN); XU, Jiankang, Ningbo, Zhejiang 315402 (CN); YU, Jian, Ningbo, Zhejiang 315402 (CN); WANG, Zunzhi, Ningbo, Zhejiang 315402 (CN); LIU, Rui, Ningbo, Zhejiang 315402 (CN)
(74) Representative: J A Kemp LLP
(86) International application number: PCT/CN2023/122953
(87) International publication number: WO 2025/000734

(57) **Abstract**

The present application relates to the technical field of batteries, and in particular to a positive electrode material and a preparation method thereof, a positive electrode sheet, and a sodium-ion battery. The positive electrode material has a chemical general formula of NaₐNi_{b}Zn_{c}Fe_{d}MnₑX_{f}O₂, where 0.85 ≤ a ≤ 1.1, 0.1 ≤ b ≤ 0.4, 0.05 ≤ c ≤ 0.4, 0.1 ≤ d ≤ 0.4, 0.1 ≤ e ≤ 0.5, 0 ≤ f ≤ 0.02, and X is at least one element selected from Ti, Al, Ta, Nb, Ge, Y, Nb, W, Zr, B, Ce, Ca, V, Si, Sr, Mg and Mo; and an X-ray diffraction pattern of the positive electrode material shows no diffraction peak in at least one of 2θ diffraction angle ranges of 31°-32° and 34°-35°. The present application can improve the problem of rapid degradation of the positive electrode material during cycling.

## Description

The present application claims priority to Chinese patent application No. CN202310781322.3 filed with China National Intellectual Property Administration on June 29, 2023, and entitled "Positive Electrode Material and Preparation Method Thereof, Positive Electrode Sheet and Sodium-ion battery", which is hereby incorporated by reference in its entirety.

### TECHNICAL FIELD

The present application relates to the technical field of batteries, and in particular to a positive electrode material and a preparation method thereof, a positive electrode sheet, and a sodium-ion battery.

### BACKGROUND

With the rapid development of new energy, cost control within the industry is becoming increasingly strict, drawing greater attention to the development and application of sodium-ion batteries. Single-crystal layered positive electrode materials have been studied more extensively due to low cost, high voltage and other advantages.

However, after the positive electrode materials are prepared with a zinc-containing precursor as the main raw material, the positive electrode materials exhibit the problem of rapid degradation during cycling.

### SUMMARY

In view of the above, the present application provides a positive electrode material and a preparation method thereof, a positive electrode sheet and a sodium-ion battery, in order to improve the problem of rapid degradation of the positive electrode material during cycling.

In a first aspect, the present application provides a positive electrode material, with technical solutions as follows.

The positive electrode material has a chemical general formula of NaₐNi_{b}Zn_{c}Fe_{d}MnₑX_{f}O₂, where 0.85 ≤ a ≤ 1.1, 0.1 ≤ b ≤ 0.4, 0.05 ≤ c ≤ 0.4, 0.1 ≤ d ≤ 0.4, 0.1 ≤ e ≤0.5, 0 ≤ f ≤0.02, and X is at least one element selected from Ti, Al, Ta, Nb, Ge, Y, Nb, W, Zr, B, Ce, Ca, V, Si, Sr, Mg and Mo; and
an X-ray diffraction pattern of the positive electrode material shows no diffraction peak in at least one of 2θ diffraction angle ranges of 31°-32° and 34°-35°.

In some embodiments, the positive electrode material satisfies at least one of the following conditions:
(1) 0.95 ≤ a ≤ 1.1; (2) 0.2 ≤ b ≤ 0.3; (3) 0.05 ≤ c ≤ 0.2; (4) 0.2 ≤ d ≤ 0.4; and (5) 0.2 ≤ e ≤ 0.4.

In some embodiments, the positive electrode material has a particle diameter satisfying: (D90-D10)/D50 ≥ 0.7.

In some embodiments, the positive electrode material has a tap density satisfying: TD ≥ 1.95 g/cm³.

In a second aspect, the present application provides a preparation method of a positive electrode material, with technical solutions as follows.

The preparation method of the positive electrode material includes the following steps:
mixing a Na source with a precursor having a chemical general formula of Ni_{b}Zn_{c}Fe_{d}Mnₑ(OH)₂ in a molar ratio of Na element to the precursor of a:1 to obtain a mixture, where 0.85 ≤ a ≤ 1.1, 0.1 ≤ b ≤ 0.4, 0.05 ≤ c ≤ 0.4, 0.1 ≤ d ≤ 0.4, and 0.1 ≤ e ≤ 0.5;
subjecting the mixture to a solid solution reaction at a temperature of greater than or equal to 700° C for no less than 2 h to obtain an intermediate product; and
sintering the intermediate product until an X-ray diffraction pattern of a sintered product shows no diffraction peak in at least one of 2θ diffraction angle ranges of 31°-32° and 34°-35°, to obtain the positive electrode material having a chemical general formula of NaₐNi_{b}Zn_{c}Fe_{d}MnₑO₂.

In some embodiments, obtaining the mixture further includes the following step:
adding an additive in a molar ratio of an X element to the precursor of f:1, where the additive is selected from an oxide or hydroxide containing the X element; the X element is at least one element selected from Ti, Al, Ta, Nb, Ge, Y, Nb, W, Zr, B, Ce, Ca, V, Si, Sr, Mg and Mo; and where 0 ≤ f ≤ 0.02.

In some embodiments, the solid solution reaction and the sintering satisfy at least one of the following conditions:
(1) a temperature of the solid solution reaction is 700°C-850°C;
(2) a time of the solid solution reaction is 2 h - 5 h;
(3) a temperature of the sintering is not less than 930 °C; and
(4) a time of the sintering is 10 h - 14 h.

In some embodiments, the precursor has a particle diameter satisfying: (D90-D10)/D50 ≥ 0.7.

In some embodiments, a preparation method of the precursor includes the following steps:
preparing a first metal salt solution and a second metal salt solution according to the chemical general formula of the precursor;
mixing the first metal salt solution, a precipitant and a complexing agent, and reacting under an alkaline condition, to obtain a seed crystal with a D50 of 1 µm - 3 µm; and
mixing the seed crystal and the second metal salt solution, and reacting under an alkaline condition, to obtain the precursor.

In some embodiments, the Na source is at least one selected from Na₂CO₃ and NaHCO₃.

In a third aspect, the present application provides a positive electrode sheet, with technical solutions as follows.

The positive electrode sheet includes a positive electrode current collector and a positive electrode active layer disposed on a surface of the positive electrode current collector, where a material of the positive electrode active layer includes the positive electrode material as described above or the positive electrode material prepared by the preparation method as described above, a conductive agent and a binder.

In some embodiments, the positive electrode sheet has an ultimate compaction density of 3.1 g/cm³ - 3.5 g/cm³.

In some embodiments, the conductive agent is one or more of acetylene black, conductive carbon black, and conductive graphite; and/or
the binder is one or more of polyvinylidene fluoride and N-methylpyrrolidone.

In a fourth aspect, the present application provides a sodium-ion battery, with technical solutions as follows.

The sodium-ion battery includes the positive electrode material as described above, the positive electrode material prepared by the preparation method as described above, or the positive electrode sheet as described above.

Compared with traditional solutions, the present application has the following beneficial effects.

After the applicant's research, it was found that the problem of rapid degradation of the positive electrode material during cycling is primarily associated with the existence of a zinc oxide phase in the structure of the positive electrode material. Specifically, during the preparation of the positive electrode material, due to the use of a zinc-containing precursor as the main raw material, the positive electrode material prepared is prone to have a structure with a zinc oxide phase in its structure, which is difficult to integrate with other oxides. As a result, it is difficult to form a structurally consistent homogeneous phase, leading to a decrease in the crystallinity. During cycling, due to anisotropy, it is prone to lead to the problems such as a sudden drop in capacity during cycling and an increase in internal resistance, which manifest as rapid degradation of the positive electrode material during cycling. Based on the above findings, the present application provides a positive electrode material with zinc element but without zinc oxide phase, which has a high cycle capacity retention rate.

In addition, since the positive electrode material contains no the zinc oxide phase, it has a high a high crystallinity in its structure, less release of active oxygen during cycling, a lower possibility of surface failure of the material, a lower risk of thermal runaway, and high safety.

### BRIEF DESCRIPTION OF DRAWINGS

In order to illustrate the technical solutions in the embodiments of the present application more clearly, and to understand the present application and its beneficial effects more completely, the accompanying drawings required for descripting the embodiments will be briefly introduced hereinafter. It is obvious that the accompanying drawings in the following description are merely some embodiments of the present application. For those skilled in the art, other accompanying drawings can also be obtained based on these accompanying drawings without creative labor.
FIG. 1 shows SEM images of precursors of Example 1 and Example 6.
FIG. 2 shows SEM images of positive electrode materials of examples and comparative examples.
FIG. 3 shows XRD patterns of positive electrode materials of Examples 1-4.
FIG. 4 shows XRD patterns of positive electrode materials of Examples 5-8.
FIG. 5 shows XRD patterns of positive electrode materials of comparative examples.

### DESCRIPTION OF EMBODIMENTS

The present application will be further illustrated in more detail hereinafter in combination with the specific embodiments. The present application can be implemented in various and different forms, and is not limited to the embodiments described herein. Instead, the purpose of providing these embodiments is to enable a more thorough and comprehensive understanding of the disclosure of the present application.

Unless otherwise defined, all of the technical and scientific terms used herein have the same meanings as those generally understood by those skilled in the technical filed of the present application. The terms used in the specification of the present application are only for the purpose of describing specific embodiments, and are not intended to limit the present application.

### Terms

Unless otherwise stated or a contradiction exists, the terms or phrases used herein have the following meanings.

In the present application, the scope of selection covered by the terms "and/or", "or/and", "as well as/or" includes any one of two or more related items listed, and includes any and all combinations of the related items listed, the any and all combinations include any combination of two related items listed, any combination of more than two related items listed, or any combination of all related items listed. It should be noted that when at least three items are connected with at least two conjunctions selected from "and/or", "or/and" and "as well as/or", it should be understood that the technical solution undoubtedly includes a technical solution where all the items are connected by "logical AND", and also undoubtedly includes a technical solution where all the items are connected by "logical OR". For example, "A and/or B" includes three parallel technical solutions: A, B, and A+B. For another example, technical solutions covered by "A, and/or, B, and/or, C, and/or, D" include any one of A, B, C, and D (i.e., a technical solution connected by "logical OR"), also include any and all combinations of A, B, C, and D, i.e., combinations of any two or any three of A, B, C, and D, and also include a combination of four items A, B, C, and D (i.e., a technical solution connected by "logical AND").

In the present application, the terms "multiple", "a plurality of", "several", "diverse" and the like, unless otherwise specified, refer to quantities greater than or equal to 2. For example, "one or more" means one, or greater than or equal to two.

In the present application, the terms "preferred", "better", "optimal", "appropriate" are only used to describe embodiments or examples that are better in effect, and it should be understood that they do not constitute a limitation on the protection scope of the present application.

In the present application, the terms "further", "more further", "particularly", etc. are used for the purpose of description to indicate the differences in content, but they should not be understood as limiting the protection scope of the present application.

In the present application, the terms "optionally", "optional", and "options" refer to something that is not essential, that is, it can be selected from either of two mutually exclusive alternatives: "with" or "without". If the term "optional" appears in multiple instances in a technical solution and there is no specific explanation, contradictions or interdependencies, each instance of "optional" is independent.

In the present application, in the reference to "first aspect", "second aspect", "third aspect", "fourth aspect" and the like, the terms "first", "second", "third", "fourth" and the like are used only for the purpose of description and should not be interpreted as indicating or implying relative importance or quantity, and should not be interpreted as implying the importance or quantity of the technical features indicated. And the terms "first," "second," "third," "fourth," and the like are only used for the purpose of non-exhaustive listing and description, and should not be understood as limiting the quantity in a closed manner.

In the present application, unless otherwise specified, in a numerical interval (i.e., numerical range), the optional numerical distribution within the above numerical range is considered to be continuous, and includes both numerical endpoints (i.e., the minimum value and the maximum value) of the numerical range, as well as each numerical value between the two numerical endpoints. Unless otherwise specified, when the numerical interval only refers to the integers within the numerical interval, it includes two endpoint integers of the numerical interval and each integer between the two endpoints, which, herein, is equivalent to explicitly listing each integer. For example, t is an integer selected from 1-10, which means t is any one of integers selected from the integer set composed of 1, 2, 3, 4, 5, 6, 7, 8, 9 and 10. Additionally, when multiple ranges are provided for descripting a feature or characteristic, these ranges can be combined. In other words, unless otherwise specified, any range disclosed herein shall be understood to include any and all sub-ranges within it.

Unless otherwise specified, temperature parameters in the present application may refer to a constant temperature, or a temperature changing within a certain temperature range. It should be understood that the constant temperature allows a temperature to fluctuate within an accuracy range controlled by an instrument, for example, fluctuating within the range of ± 5°C, ± 4°C, ± 3°C, ± 2°C, or ± 1°C.

In the present application, unless otherwise specified, the terms "percent content" refer to mass percent for solid-liquid mixtures and solid-solid mixtures, and to volume percent for liquid-liquid mixtures.

In the present application, unless otherwise specified, the terms "percentage concentration" refers to the final concentration. The final concentration refers to the ratio of the added component in the system after the addition of the component.

After the applicant's research, it was found that the problem of rapid degradation of the positive electrode material during cycling is mainly associated with the existence of a zinc oxide phase in the structure of the positive electrode material. Specifically, during the preparation of the positive electrode material, due to the use of a zinc-containing precursor as the main raw material, the positive electrode material prepared is prone to have a zinc oxide phase in its structure, which is difficult to integrate with other oxides. As a result, it is difficult to form a structurally consistent homogeneous phase, leading to reduced crystallinity. During cycling, due to anisotropy, it is prone to lead to the problems such as a sudden drop in capacity during cycling and an increase in internal resistance, which manifest as rapid degradation of the positive electrode material during cycling. Based on the above findings, an embodiment of the present application provides a positive electrode material, which has a chemical general formula of NaₐNi_{b}Zn_{c}Fe_{d}MnₑX_{f}O₂, where 0.85 ≤ a ≤ 1.1, 0.1 ≤ b ≤ 0.4, 0.05 ≤ c ≤ 0.4, 0.1 ≤ d ≤ 0.4, 0.1 ≤ e ≤ 0.5, 0 ≤ f ≤ 0.02, and X is at least one element selected from Ti, Al, Ta, Nb, Ge, Y, Nb, W, Zr, B, Ce, Ca, V, Si, Sr, Mg and Mo; and an X-ray diffraction pattern of the positive electrode material shows no diffraction peaks in at least one of 20 diffraction angle ranges of 31°-32° and 34°-35°.

The positive electrode material as described above has a high cycle capacity retention rate. In addition, since the positive electrode material contains no zinc oxide phase, it has a high crystallinity in its structure, less release of active oxygen during cycling, a lower possibility of surface failure of the material, a lower risk of thermal runaway, and high safety.

In this embodiment, no diffraction peak in at least one of 2θ diffraction angle ranges of 31°-32° and 34°-35° indicates that the zinc oxide phase is absence in the structure of the positive electrode material, and the positive electrode material of this embodiment has a high cycle capacity retention rate. Furthermore, no diffraction peak exists in at least one of 20 diffraction angle ranges of 31°-32° and 34°-35°.

It can be understood that the in at least one of the ranges of 31°-32° and 34°-35° refers to in the range of 31°-32°, or in the range of 34°-35°, or simultaneously in both ranges of 31°-32° and 34°-35°.

It can be understood that a may be 0.85, 0.88, 0.9, 0.93, 0.95, 0.99, 1.0, or 1.1. Preferably, 0.95 ≤ a ≤ 1.1;
b may be 0.1, 0.2, 0.3, or 0.4, preferably, 0.2 ≤ b ≤ 0.3;
c may be 0.05, 0.1, 0.2, 0.3, or 0.4, preferably, 0.05 ≤ c ≤ 0.2;
d may be 0.1, 0.2, 0.3, or 0.4, preferably, 0.2 ≤ d ≤ 0.4;.
e may be 0.1, 0.2, 0.3, 0.4, or 0.5, preferably, 0.2 ≤ e ≤ 0.4; and
f may be 0, 0.001, 0.005, 0.01, 0.015, or 0.02.

Optionally, the positive electrode material has a particle diameter satisfying: (D90-D10)/D50 ≥ 0.7. Use of the positive electrode material satisfying the above particle diameter distribution is conductive to the preparation of the positive electrode sheet with high compaction density.

It can be understood that the (D90-D10)/D50 may be 0.7, 0.8, 0.9, 1, 1.5, or 2.

Generally, the higher the ultimate compaction density of the positive electrode sheet, the higher the energy density of the battery, so it also becomes a research hotspot for research and development and manufacturing personnel to improve the ultimate compaction density of the positive electrode sheet. Currently, the ultimate compaction density of the positive electrode sheet has reached 3.0 g/cm³, which is a very high level, and it is difficult to further improve it on this basis. In this embodiment, use of the positive electrode material satisfying the above-mentioned wide particle diameter distribution is conducive to improving the compaction performance of the subsequent positive electrode sheet. This can increase the ultimate compaction density of the positive electrode sheet to 3.1 g/cm³ - 3.5 g/cm³, which is conducive to improving the energy density of the battery.

Furthermore, optionally, the positive electrode material has a tap density satisfying: TD ≥ 1.95 g/cm³. The positive electrode material satisfying the tap density as described above basically has no agglomeration except for a wide particle diameter distribution, which is conducive to improving the electrochemical performance of the battery, such as the initial efficiency.

In summary, the positive electrode material of this embodiment has a high cycle capacity retention rate, which is conducive to improving the ultimate compaction density of the positive electrode sheet, the electrochemical performance of the battery, and reducing the risk of thermal runaway of the battery.

An embodiment of the present application further provides a preparation method of a positive electrode material, including the following steps:
mixing a Na source with a precursor having a chemical general formula Ni_{b}Zn_{c}Fe_{d}Mnₑ(OH)₂ in a molar ratio of Na element to the precursor of a:1 to obtain a mixture, where 0.85 ≤ a ≤ 1.1, 0.1 ≤ b ≤ 0.4, 0.05 ≤ c ≤ 0.4, 0.1 ≤ d ≤ 0.4, and 0.1 ≤ e ≤ 0.5;
subjecting the mixture to a solid solution reaction at a temperature of greater than or equal to 700° C for no less than 2 h to obtain an intermediate product; and
sintering the intermediate product until an X-ray diffraction pattern of a sintered product shows no diffraction peak in at least one of 20 diffraction angle ranges of 3 1°-32° and 34°-35°, to obtain the positive electrode material having a chemical general formula NaₐNi_{b}Zn_{c}Fe_{d}MnₑO₂.

Distinguished from a direct sintering of the mixture of the Na source and the precursor, in this embodiment, the mixture is firstly subjected to the solid solution reaction, which promotes the diffusion of Na source and the fusion of zinc through the solid solution reaction, eliminating a portion of the zinc oxide phase. And then the intermediate product is sintered to further eliminate the zinc oxide phase and obtain a layered positive electrode material with a stable structure and excellent comprehensive performance.

Optionally, obtaining the mixture further includes the following steps:
adding an additive in a molar ratio of a X element to the precursor of f:1, where the additive is selected from an oxide or hydroxide containing the X element; the X element is at least one element selected from Ti, Al, Ta, Nb, Ge, Y, Nb, W, Zr, B, Ce, Ca, V, Si, Sr, Mg and Mo; and 0 ≤ f ≤ 0.02.

In this embodiment, if the temperature of the solid solution reaction is too low or the time of the solid solution reaction is too short, the zinc in the structure is not fused completely, resulting in a large residual amount of zinc oxide phase.

Optionally, the temperature of the solid solution reaction is lower than the temperature of the sintering.

Optionally, the temperature of the solid solution reaction is 700°C-850°C. It can be understood that the temperature of the solid solution reaction includes but is not limited to 700 °C, 750 °C, 800 °C, and 850 °C.

Optionally, the time of the solid solution reaction is 2 h - 5 h. It can be understood that the time of the solid solution reaction includes but is not limited to 2h, 3h, 4h, and 5h.

In this embodiment, if the temperature of the solid solution reaction is too high or the time of the solid solution reaction is too long, it tends to lead to the agglomeration of the particles of the positive electrode material, which is manifested as the tap density of the positive electrode material being <1.95 g/cm³.

Optionally, the temperature of the sintering is not less than 930°C. Further, optionally, the temperature of the sintering is 930°C-1000°C. It can be understood that the temperature of the sintering includes but is not limited to 930°C, 940°C, 950°C, 960°C, 970°C, 980°C, 990°C, and 1000°C.

Optionally, the time of the sintering is 10 h - 14 h. It can be understood that the time of the sintering includes but is not limited to 10 h, 11 h, 12 h, 13 h, and 14 h.

In this embodiment, if the temperature of the sintering is too low or the time of the sintering is too short, structural uniformity of the positive electrode material is reduced; if the temperature of the sintering is too high or the time of the sintering is too long, it tends to lead to the agglomeration of the particles of the positive electrode material, which is manifested as the tap density of the positive electrode material being < 1.95 g/cm.

By the solid solution reaction and sintering as described above, the zinc oxide phase can be eliminated in the structure of the positive electrode material, and the positive electrode material with good structural uniformity and high cycle capacity retention rate can be prepared. Meanwhile, the sintering can improve the particle roundness of the positive electrode material, which is conducive to improving the ultimate compaction density of the subsequent positive electrode sheet.

It can be understood that after the sintering, the preparation method further includes the steps of crushing, sieving, iron removal, and packaging of the sintered product.

The particle diameter distribution of the positive electrode material is mainly influenced by the particle diameter distribution of the precursor. Optionally, the particle diameter of the precursor satisfies: (D90-D10)/D50 ≥ 0.7.

Optionally, the precursor can be prepared by a continuous method. Compared with the precursor prepared by an intermittent method, the precursor prepared by the continuous method has a wider particle diameter distribution, which is conducive to preparing the positive electrode material with a wider particle diameter distribution, and to preparing the positive electrode sheet with a higher ultimate compaction density.

Optionally, the preparation of the precursor by the continuous method includes the following steps:
preparing a first metal salt solution and a second metal salt solution according to the chemical general formula of the precursor;
mixing the first metal salt solution, a precipitant and a complexing agent, followed by reaction under an alkaline condition, to obtain a seed crystal with a D50 of 1 µm - 3 µm; and
mixing the seed crystal with the second metal salt solution, followed by reaction under an alkaline condition, to obtain the precursor.

Optionally, metal elements in the first metal salt solution and the second metal salt solution are one or more selected from Ni, Zn, Fe and Mn elements.

Optionally, the precipitant and complexing agent are common reagents for preparing the precursor. For example, the precipitant may be NaOH, and the complexing agent may be ammonia water, with no specific limit.

Optionally, the first metal salt solution, the precipitant and the complexing agent may be reacted under conditions of a temperature of 50°C-70°C, a pH of 11.3-12.0, and an ammonia value of 3.3 g/L - 3.7 g/L.

Optionally, the seed crystal and the second metal salt solution may be reacted under conditions of a temperature of 50°C-70°C, a pH of 11.3-12.0, and an ammonia value of 3.3 g/L - 3.7 g/L. After the reaction, filtration and drying are performed to obtain the precursor.

Optionally, the Na source is at least one selected from Na₂CO₃ and NaHCO₃.

The preparation method as described above can improve the cycle capacity retention rate of the positive electrode material, improve the ultimate compaction density of the positive electrode sheet, improve the initial efficiency of the battery, and reduce the risk of thermal runaway, and the preparation method is simple, which is conducive to rapid commercialization.

An embodiment of the present application further provides a positive electrode sheet, including a positive electrode current collector and a positive electrode active layer disposed on a surface of the positive electrode current collector. A material of the positive electrode active layer includes the positive electrode material as described above, a conductive agent and a binder.

The above positive electrode sheet has all the advantages of the positive electrode material as described above, which will not be repeated here.

Optionally, the positive electrode sheet has an ultimate compaction density of 3.1 g/cm³ - 3.5 g/cm³. The positive electrode sheet of this embodiment has a high ultimate compaction density, which is conducive to improving the energy density of the battery.

Optionally, the conductive agent is one or more of acetylene black, conductive carbon black, and conductive graphite.

Optionally, the binder is one or more selected from polyvinylidene fluoride and N-methylpyrrolidone.

An embodiment of the present application further provides a sodium-ion battery, including the positive electrode material as described above, or the positive electrode material prepared by the preparation method as described above, or the positive electrode sheet as described above.

Optionally, the sodium-ion battery further includes a negative electrode sheet, an electrolyte, and a separator.

The following will provide further description in combination with specific examples and comparative examples, and unless otherwise specified, the raw materials involved in the following specific examples and comparative examples are commercially available, the instruments are commercially available, and the processes involved are conventional choices for those skilled in the art.

### Example 1

This example provides a positive electrode material and a preparation method thereof, which includes the following steps.

### Step 1: Preparation of the precursor

A nickel sulfate solution, a zinc sulfate aqueous solution, an iron sulfate aqueous solution, and a manganese sulfate aqueous solution were prepared in a molar ratio of Ni, Zn, Fe, and Mn of 0.23:0.1:0.33:0.33.

A part of the nickel sulfate aqueous solution, a part of the zinc sulfate aqueous solution, a part of the iron sulfate aqueous solution, a part of the manganese sulfate aqueous solution, NaOH precipitant and ammonia water complexing agent were mixed and reacted under conditions of a temperature of 60°C, a pH of 11.5 and an ammonia value of 3.5 g/L, to obtain a seed crystal with a D50 of 1 µm - 3 µm.

The seed crystal and the remaining part of the nickel sulfate aqueous solution, the remaining part of the zinc sulfate aqueous solution, the remaining part of the iron sulfate aqueous solution and the remaining part of the manganese sulfate aqueous solution were reacted under conditions of a temperature of 60°C, a pH of 11.5 and an ammonia value of 3.5 g/L, and then filtered and dried to obtain a precursor with a chemical general formula of Ni_{0,23}Zn_{0,10}Fe_{0.33}Mn_{0.33}(OH)₂.

Step 2: 10 kg of the precursor Ni_{0.23}Zn_{0.10}Fe_{0.33}Mn_{0.33}(OH)₂ obtained in Step 1 was added into a 4 L high-speed mixer, and sodium carbonate was added in a molar ratio of Na element to the precursor of 1:1, followed by transferring to a 100 L high-speed mixer, to stir and mix at 800 rpm for 20 min to obtain a mixture.

Step 3: the mixture obtained in Step 2 was placed in a sagger, followed by introducing an air atmosphere thereinto, heated to 750°C at a rate of 2 °C/min and held for 3 h to conduct a solid solution reaction to obtain an intermediate product.

Step 4: the intermediate product obtained in Step 3 was further heated to 950°C at a rate of 2 °C/min and sintered for 12 h, then cooled to room temperature to obtain a layered positive electrode material, which was then crushed by an airflow mill, sieved, iron removed, and packaged to obtain positive electrode material particles.

### Example 2

This example provides a positive electrode material and a preparation method thereof, which includes the following steps.

Step 1: same as Example 1.

Step 2: same as Example 1.

Step 3: the mixture obtained in Step 2 was placed in a sagger, followed by introducing an air atmosphere thereinto, and heated to 705°C at a rate of 2 °C/min and held for 2 h to conduct a solid solution reaction to obtain an intermediate product.

Step 4: the intermediate product obtained in Step 3 was further heated to 950°C at a rate of 2 °C/min and sintered for 12 h, then cooled to room temperature to obtain a layered positive electrode material, which was then crushed by an airflow mill, sieved, iron removed, and packaged to obtain positive electrode material particles.

### Example 3

This example provides a positive electrode material and a preparation method thereof, which includes the following steps.

Step 1: same as Example 1.

Step 2: same as Example 1.

Step 3: the mixture obtained in Step 2 was placed in a sagger, followed by introducing an air atmosphere thereinto, and heated to 845°C at a rate of 2 °C/min and held for 2 h to conduct a solid solution reaction to obtain an intermediate product.

Step 4: the intermediate product obtained in Step 3 was further heated to 950°C at a rate of 2 °C/min and sintered for 12 h, then cooled to room temperature to obtain a layered positive electrode material, which was then crushed by an airflow mill, sieved, iron removed, and packaged to obtain positive electrode material particles.

### Example 4

This example provides a positive electrode material and a preparation method thereof, which includes the following steps.

Step 1: same as Example 1.

Step 2: same as Example 1.

Step 3: the mixture obtained in Step 2 was placed in a sagger, followed by introducing an air atmosphere thereinto, heated to 750°C at a rate of 2 °C/min and held for 3 h to conduct a solid solution reaction to obtain an intermediate product.

Step 4: the intermediate product obtained in Step 3 was further heated to 935°C at a rate of 2 °C/min and sintered for 10 h, then cooled to room temperature to obtain a layered positive electrode material, which was then crushed by an airflow mill, sieved, iron removed, and packaged to obtain positive electrode material particles.

### Example 5

This example provides a positive electrode material and a preparation method thereof, which includes the following steps.

Step 1: same as Example 1.

Step 2: same as Example 1.

Step 3: the mixed material obtained in Step 2 was placed in a sagger, followed by introducing an air atmosphere thereinto, heated to 750°C at a rate of 2 °C/min and held for 3 h to conduct a solid solution reaction to obtain an intermediate product.

Step 4: the intermediate product obtained in Step 3 was further heated to 995°C at a rate of 2 °C/min and sintered for 14 h, then cooled to room temperature to obtain a layered positive electrode material, which was then crushed by an airflow mill, sieved, iron removed, and packaged to obtain positive electrode material particles.

### Example 6

This example provides a positive electrode material and a preparation method thereof, which includes the following steps.

### Step 1: preparation of the precursor

A nickel sulfate aqueous solution, a zinc sulfate aqueous solution, an iron sulfate aqueous solution, and a manganese sulfate aqueous solution were prepared in a molar ratio of Ni, Zn, Fe, and Mn of 0.23:0.1:0.33:0.33.

A part of the nickel sulfate aqueous solution, a part of the zinc sulfate aqueous solution, a part of the iron sulfate aqueous solution, a part of the manganese sulfate aqueous solution, NaOH precipitant and ammonia water complexing agent were mixed and reacted under conditions of a temperature of 60°C, a pH of 11.5 and an ammonia value of 3.5g/L, to obtain a precursor with a chemical general formula Ni_{0.23}Zn_{0.10}Fe_{0.33}Mn_{0.33}(OH)₂, with a D50 of 3 µm - 7 µm.

Steps 2-4: same as Example 1.

### Example 7

This comparative example provides a positive electrode material and a preparation method thereof, which includes the following steps.

Step 1: same as Example 1.

Step 2: same as Example 1.

Step 3: the mixture obtained in Step 2 was placed in a sagger, followed by introducing an air atmosphere thereinto, heated to 750°C at a rate of 2 °C/min and held for 3 h to conduct a solid solution reaction.

Step 4: the intermediate product obtained in Step 3 was further heated to 1050°C at a rate of 2 °C/min and sintered for 12 h, then cooled to room temperature to obtain a layered positive electrode material, which was then crushed by an airflow mill, sieved, iron removed, and packaged to obtain positive electrode material particles.

### Example 8

This comparative example provides a positive electrode material and a preparation method thereof, which includes the following steps.

Step 1: same as Example 1.

Step 2: same as Example 1.

Step 3: the mixture obtained in Step 2 was placed in a sagger, followed by introducing an air atmosphere thereinto, heated to 900°C at a rate of 2 °C/min and held for 3 h to conduct a solid solution reaction.

Step 4: the intermediate product obtained in Step 3 was further heated to 950°C at a rate of 2 °C/min and sintered for 12 h, then cooled to room temperature to obtain a layered positive electrode material, which was then crushed by an airflow mill, sieved, iron removed, and packaged to obtain positive electrode material particles.

### Comparative Example 1

This comparative example provides a positive electrode material and a preparation method thereof, which includes the following steps.

Step 1: sodium carbonate, nickel oxide, zinc oxide, iron oxide, and manganese tetraoxide were added to a 4L high-speed mixer in a molar ratio of Na, Ni, Zn, Fe, and Mn of 1:0.23:0.1:0.33:0.33, transferred to a 100L high-speed mixer, and stirred and mixed at 800 rpm for 20 min to obtain a mixture.

Step 2: the mixture obtained in Step 1 was placed in a sagger, followed by introducing an air atmosphere thereinto, heated to 750°C at a rate of 2 °C/min and held for 3 h to conduct a solid solution reaction.

Step 3: the intermediate product obtained in Step 2 was further heated to 995°C at a rate of 2 °C/min and sintered for 14 h, then cooled to room temperature to obtain a layered positive electrode material, which was then crushed by an airflow mill, sieved, iron removed, and packaged to obtain positive electrode material particles.

### Comparative Example 2

This comparative example provides a positive electrode material and a preparation method thereof, which includes the following steps.

Step 1: same as Example 1.

Step 2: same as Example 1.

Step 3: the mixture obtained in the Step 2 was placed in a sagger, followed by introducing an air atmosphere thereinto, and heated to 950 °C at a rate of 2 °C/min and sintered for 12 h, then cooled to room temperature to obtain a layered positive electrode material, which was then crushed by an airflow mill, sieved, iron removed, and packaged to obtain positive electrode material particles.

### Comparative Example 3

This comparative example provides a positive electrode material and a preparation method thereof, which includes the following steps.

Step 1: same as Example 1.

Step 2: same as Example 1.

Step 3: the mixture obtained in Step 2 was placed in a sagger, followed by introducing an air atmosphere thereinto, heated to 750°C at a rate of 2 °C/min and held for 3 h to conduct a solid solution reaction.

Step 4: the intermediate product obtained in Step 3 was further heated to 900°C at a rate of 2 °C/min and sintered for 12 h, then cooled to room temperature to obtain a layered positive electrode material, which was then crushed by an airflow mill, sieved, iron removed, and packaged to obtain positive electrode material particles.

### Comparative Example 4

This comparative example provides a positive electrode material and a preparation method thereof, which includes the following steps.

Step 1: same as Example 1.

Step 2: same as Example 1.

Step 3: the mixture obtained in Step 2 was placed in a sagger, followed by introducing an air atmosphere thereinto, heated to 650°C at a rate of 2 °C/min and held for 3 h to conduct a solid solution reaction.

Step 4: the intermediate product obtained in Step 3 was further heated to 950°C at a rate of 2 °C/min and sintered for 12 h, then cooled to room temperature to obtain a layered positive electrode material, which was then crushed by an airflow mill, sieved, iron removed, and packaged to obtain positive electrode material particles.

### Testing items

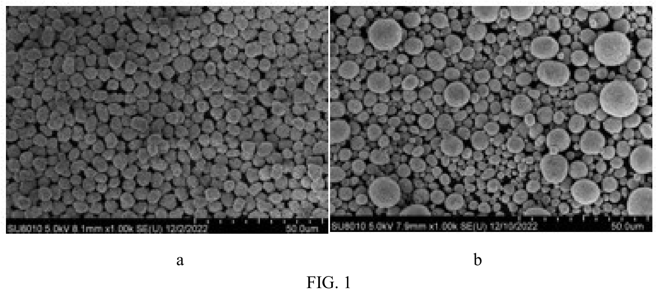

Item 1: the morphologies of the precursors obtained in Steps 1 of Examples 1 and 6 were tested respectively, as shown in FIG. 1. FIG. 1a is an SEM image of the precursor of Example 6, and FIG. 1b is an SEM image of the precursor of Example 1. It can be seen that the precursor of Example 1 has a wider particle diameter distribution, and the precursor of Example 6 has a more concentrated particle diameter distribution.

Item 2: the (D90-D10)/D50 of the precursors of Examples 1 and 6, and the (D90-D10)/D50 of the positive electrode material particles of Examples 1 and 6 were tested. The method is as follows: the instrument Malvern Master Size 2000 is used, and the pure water is used as the dispersant; before testing, the internal ultrasonication is performed at an intensity of 10 for 10 s; about 0.5g of sample powder is added to 800L of water with a sample spoon; the speed of the stirrer is set to be 2600 rpm, and the obscuration is set to be 8-12%, and the laser particle diameter test is performed. The results are shown in Table 1. It can be seen that the particle diameter distribution of the positive electrode material particles mainly depends on the particle diameter distribution of the precursors. Compared with Example 6, the particle diameter distribution of Example 1 is wider, which is conducive to improving the compaction density of the electrode sheet.

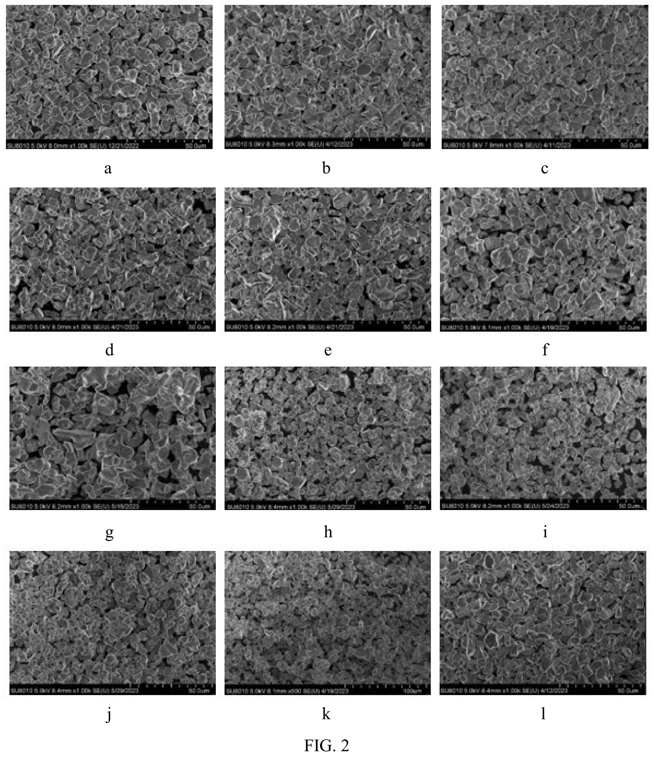

Item 3: the morphology of the positive electrode material particles of each example and each comparative example was tested, as shown in FIG. 2. FIG. 2a is the SEM image of the positive electrode material particles of Example 1, FIG. 2b is the SEM image of the positive electrode material particles of Example 2, FIG. 2c is the SEM image of the positive electrode material particles of Example 3, FIG. 2d is the SEM image of the positive electrode material particles of Example 4, FIG. 2e is the SEM image of the positive electrode material particles of Example 5, FIG. 2f is the SEM image of the positive electrode material particles of Example 6, FIG. 2g is the SEM image of the positive electrode material particles of Example 7, FIG. 2h is the SEM image of the positive electrode material particles of Example 8, FIG. 2i is the SEM image of the positive electrode material particles of Comparative Example 1, FIG. 2j is the SEM image of the positive electrode material particles of Comparative Example 2, FIG. 2k is the SEM image of the positive electrode material particles of Comparative Example 3, and FIG. 2l is the SEM image of the positive electrode material particles of Comparative Example 4. It can be seen that the particle diameter distribution of Example 6 is more concentrated without small particles; Examples 7 and 8 show agglomeration; Comparative Examples 1-3 show agglomeration. Combined with the tap density and the electrochemical performance recorded in Table 1, it can be seen that when the positive electrode material particles have no small particles or no agglomeration, the tap density is less than < 1.95 g/cm, which is not conducive to its electrochemical performance.

Item 4: the tap density of the positive electrode material particles of each example and each comparative example was tested. The method is as follows: the equipment BT-301 from Dandong Bettersize is used, 20g of the sample is taken and placed in a 25mL graduated cylinder, the vibration frequency is set to be 2000 times/min, and the vibration is performed 2000 times. The tap density TD is obtained according to the formula TD = m/V. The results are shown in Table 1.

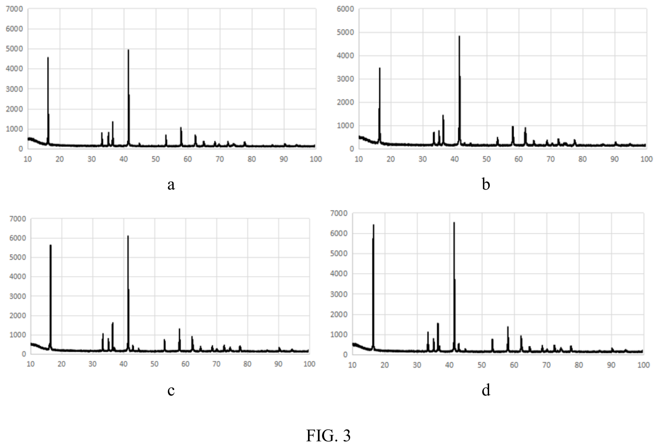

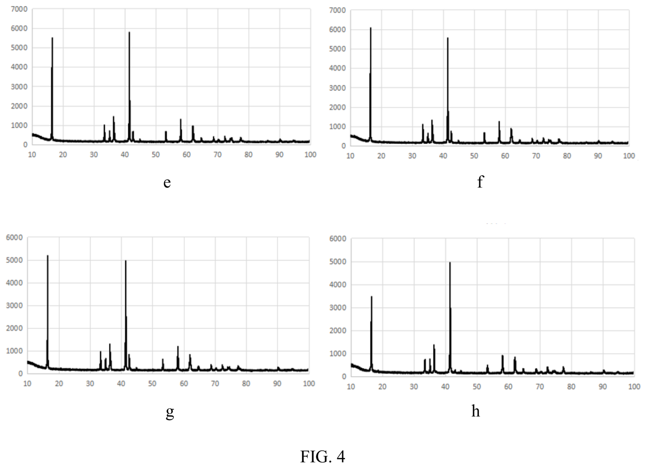

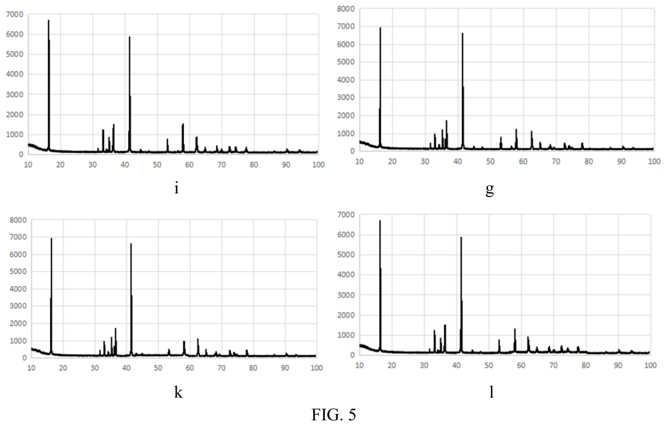

Item 5: X-ray diffraction test was performed on the positive electrode material particles of each example and each comparative example, as shown in FIGs. 3, 4 and 5. FIG. 3a is the XRD pattern of the positive electrode material particles of Example 1, FIG. 3b is the XRD pattern of the positive electrode material particles of Example 2, FIG. 3c is the XRD pattern of the positive electrode material particles of Example 3, FIG. 3d is the XRD pattern of the positive electrode material particles of Example 4, FIG. 4e is the XRD pattern of the positive electrode material particles of Example 5, FIG. 4f is the XRD pattern of the positive electrode material particles of Example 6, FIG. 4g is the XRD pattern of the positive electrode material particles of Example 7, FIG. 4h is the XRD pattern of the positive electrode material particles of Example 8, FIG. 5i is the XRD pattern of the positive electrode material particles of Comparative Example 1, FIG. 5j is the XRD pattern of the positive electrode material particles of Comparative Example 2, FIG. 5k is the XRD pattern of the positive electrode material particles of Comparative Example 3, and FIG. 5lis the XRD pattern of the positive electrode material particles of Comparative Example 4. Combined with the standard card of ZnO, it can be seen that the positive electrode material particles of Examples 1-8 contain no ZnO, while the positive electrode material particles of Comparative Examples 1-4 have ZnO diffraction peaks with an intensity of more than 200.

Item 6: the positive electrode material particles of each example and each comparative example were prepared into a positive electrode sheet, which was then assembled into a button battery. The specific method is as follows: the positive electrode material, acetylene black and polyvinylidene fluoride (PVDF) are weighed according to a mass ratio of 90:5:5, mixed evenly, and added with NMP and stirred for 2 h, to obtain a viscous slurry; the viscous slurry is evenly coated on an aluminum foil with a thickness of 15 µm, then vacuum baked at 80°C, pressed into a sheet and cut into a positive electrode disc with a diameter of 14 mm; a pure sodium sheet with a diameter of 16 mm is used as the negative electrode sheet, the ENA-18 from TINCI is used as the electrolyte, and a PP-PE-PP composite separator is used; the button battery is assembled in a groove box full of argon gas.

6.1 The ultimate compaction density of the positive electrode sheet of each example and each comparative example was tested, and the specific method is as follows: the electrode sheet is folded in half to observe the presence of a hole, and the compaction corresponding to the appearance of the hole is referred to as the ultimate compaction. The results are shown in Table 1.

6.2 The first discharge capacity, initial efficiency, and cycle capacity retention rate of the button battery of each example and each comparative example were tested, and the specific method is as follows: the voltage range is 2 V - 4 V, the nominal gram capacity is 150 mAh/g, and the specific test process is as follows: charging and discharging for two cycles at 0.1/0.1 C with a constant-voltage cut-off current of 0.05 C. The charging and discharging gram capacity are obtained by testing, and the initial efficiency is calculated. The results are shown in Table 1.

6.3 The positive electrode materials particles of each example and each comparative example were prepared into the positive electrode sheets and assembled into full batteries. The specific method is as follows: the positive electrode material, conductive carbon black SP, conductive graphite KS-6, and binder PVDF in a mass ratio of 94.5%:2%:1%:2.5% are mixed with NMP (N-methylpyrrolidone) to obtain a positive electrode slurry, and the positive electrode slurry is prepared into the positive electrode sheet by coating and rolling processes; the positive electrode sheet is assembled with the negative electrode sheet (hard carbon), the separator, and the electrolyte (1mol/L NaPF₆ + DEC/EC (volume ratio 1:1)) to obtain a full battery with model 503048 and with a capacity of about 400 mAh. The full battery was used for testing.

Test of cycling performance: the test is performed using test cabinet CT3008-5V3A-A1 (from NEWARE), at 45°C, with a cycle voltage of 4-2V and a constant-voltage cut-off current of 20 mA, for 300 cycles.

Gas generation amount due to thermal runaway was tested at 45°C for 7 days. The results are shown in Table 1.

DCR growth rate was tested at 45°C for 300 times. The results are shown in Table 1.

**Table 1**

| | (D90 - D10)/D 50 of precursor | (D90 - D10) /D50 of positive electrode material | Tap density (g/cm ³) | Whether ZnO is contained | Ultimate compaction density (g/cm³) | First discharging capacity (mAh/g) | Initial coulombic efficiency (%) | Test for gas generation at 45°C for 7 days (%) | Cycle capacity retention rate at 45°C for 300 cycles (%) | DCR growth rate at 45°C for 300 cycles (%) |
|---|---|---|---|---|---|---|---|---|---|---|
| Example 1 | 1.22 | 1.38 | 2.05 | No | 3.18 | 135.7 | 94.3 | 5.5 | 90.6 | 19.6 |
| Example 2 | / | / | 2.08 | No | 3.2 | 134.7 | 94.7 | 4.7 | 90.7 | 17.8 |
| Example 3 | / | / | 1.99 | No | 3.19 | 135.1 | 94.9 | 6.1 | 91.2 | 19.3 |
| Example 4 | / | / | 2.02 | No | 3.17 | 133.8 | 93.8 | 5.3 | 90.9 | 18 |
| Example 5 | / | / | 2.01 | No | 3.16 | 136.2 | 94.2 | 4.9 | 90.4 | 20.1 |
| Example 6 | 0.62 | 0.67 | 1.78 | No | 3.03 | 124.7 | 90.1 | 10.6 | 88.4 | 27.4 |
| Example 7 | / | / | 1.9 | No | 3.08 | 119.8 | 88.7 | 11.2 | 88.5 | 21.5 |
| Example 8 | / | / | 1.92 | No | 3.09 | 126.5 | 89.5 | 11.6 | 87.2 | 22.5 |
| Comparative Example 1 | / | / | 1.84 | Yes | 3.02 | 120.7 | 89.3 | 24.5 | 82.2 | 39.6 |
| Comparative Example 2 | / | / | 1.91 | Yes | 3.09 | 125.6 | 89.6 | 19.6 | 85.7 | 34.5 |
| Comparative Example 3 | / | / | 1.88 | Yes | 3.07 | 129.1 | 89.6 | 24.9 | 83.8 | 32.6 |
| Comparative Example 4 | / | / | 2.01 | Yes | 3.14 | 130.8 | 90.1 | 14.3 | 86.7 | 31.4 |

It is known that the positive electrode material of each example has good cycle performance, especially, the positive electrode materials of Examples 1-5 have no ZnO phase, and in addition to the high cycle capacity retention rate, low gas generation amount due to thermal runaway, and small DCR growth rate, the positive electrode sheets prepared have a high ultimate compaction density and a large tap density, and other electrochemical performances of the battery prepared are all good.

The various technical features of the above-mentioned embodiments can be combined arbitrarily. In order to facilitate the description, not all possible combinations of the various technical features in the above-mentioned embodiments are described. However, as long as there is no contradiction in the combination of these technical features, it should be considered within the scope of the present specification.

The examples as described above only represent several embodiments of the present application, which are described in a specific and detailed manner, but these cannot be understood as a limitation on the scope of the patent application. It should be noted that, for those ordinary skilled in the art, in the case of not departing from the concept of the present application, variations and improvements can further be made, which are within the protection scope of the present application. Accordingly, the protection scope of the patent of the present application should subject to the appended claims.

## Claims

1. A positive electrode material, wherein the positive electrode material has a chemical general formula of NaₐNi_{b}Zn_{c}Fe_{d}MnₑX_{f}O₂; wherein 0.85 ≤ a ≤ 1.1, 0.1 ≤ b ≤ 0.4, 0.05 ≤ c ≤ 0.4, 0.1 ≤ d ≤ 0.4, 0.1 ≤ e ≤ 0.5, 0 ≤ f ≤ 0.02, and X is at least one element selected from Ti, Al, Ta, Nb, Ge, Y, Nb, W, Zr, B, Ce, Ca, V, Si, Sr, Mg and Mo; and
an X-ray diffraction pattern of the positive electrode material shows no diffraction peak in at least one of 2θ diffraction angle ranges of 31°-32° and 34°-35°.

2. The positive electrode material according to claim 1, wherein the positive electrode material satisfies at least one of the following conditions:
(1) 0.95 ≤ a ≤ 1.1; (2) 0.2 ≤ b ≤ 0.3; (3) 0.05 ≤ c ≤ 0.2; (4) 0.2 ≤ d ≤ 0.4; and (5) 0.2 ≤ e ≤ 0.4.

3. The positive electrode material according to claim 1 or 2, wherein the positive electrode material has a particle diameter satisfying: (D90-D10)/D50 ≥ 0.7.

4. The positive electrode material according to claim 3, wherein the positive electrode material has a tap density satisfying: TD ≥ 1.95 g/cm³.

5. A preparation method of a positive electrode material, comprising the following steps:
mixing a Na source with a precursor having a chemical general formula of Ni_{b}Zn_{c}Fe_{d}Mnₑ(OH)₂ in a molar ratio of Na element to the precursor of a:1 to obtain a mixture, wherein 0.85 ≤ a ≤ 1.1, 0.1 ≤ b ≤ 0.4, 0.05 ≤ c ≤ 0.4, 0.1 ≤ d ≤ 0.4, and 0.1 ≤ e ≤ 0.5;
subjecting the mixture to a solid solution reaction at a temperature of greater than or equal to 700° C for no less than 2 h to obtain an intermediate product;
sintering the intermediate product until an X-ray diffraction pattern of a sintered product shows no diffraction peak in at least one of 20 diffraction angle ranges of 31°-32° and 34°-35°, to obtain the positive electrode material having a chemical general formula of NaₐNi_{b}Zn_{c}Fe_{d}MnₑO₂.

6. The preparation method of the positive electrode material according to claim 5, wherein obtaining the mixture further comprises the following steps:
adding an additive in a molar ratio of a X element to the precursor of f:1, wherein the additive is selected from an oxide or hydroxide containing the X element; the X element is at least one element selected from Ti, Al, Ta, Nb, Ge, Y, Nb, W, Zr, B, Ce, Ca, V, Si, Sr, Mg and Mo; and wherein 0 ≤ f ≤ 0.02.

7. The preparation method of the positive electrode material according to claim 5 or 6, wherein the solid solution reaction and the sintering satisfy at least one of the following conditions:
(1) a temperature of the solid solution reaction is 700°C-850°C;
(2) a time of the solid solution reaction is 2 h - 5 h;
(3) a temperature of the sintering is not less than 930 °C; and
(4) a time of the sintering is 10 h - 14 h.

8. The preparation method of the positive electrode material according to claim 5 or 6, wherein the precursor has a particle diameter satisfying: (D90-D10)/D50 ≥ 0.7.

9. The preparation method of the positive electrode material according to claim 8, wherein the preparation method of the precursor comprises the following steps:
preparing a first metal salt solution and a second metal salt solution according to the chemical general formula of the precursor;
mixing the first metal salt solution, a precipitant and a complexing agent, and reacting under an alkaline condition, to obtain a seed crystal with a D50 of 1 µm - 3 µm; and
mixing the seed crystal with the second metal salt solution, and reacting under an alkaline condition, to obtain the precursor.

10. The preparation method of the positive electrode material according to claim 9, wherein metal elements in the first metal salt solution and the second metal salt solution are one or more selected from Ni, Zn, Fe and Mn elements.

11. The preparation method of the positive electrode material according to claim 9 or 10, wherein the first metal salt solution, the precipitant and the complexing agent are reacted under conditions of a temperature of 50°C-70°C, a pH of 11.3-12.0, and an ammonia value of 3.3g/L-3.7g/L.

12. The preparation method of the positive electrode material according to any one of claims 9-11, wherein the seed crystal and the second metal salt solution are reacted under conditions of a temperature of 50°C-70°C, a pH of 11.3-12.0, and an ammonia value of 3.3 g/L - 3.7 g/L.

13. The preparation method of the positive electrode material according to any one of claims 5, 6, and 9-12, wherein the Na source is at least one selected from Na₂CO₃ and NaHCO₃.

14. A positive electrode sheet, comprising a positive electrode current collector and a positive electrode active layer disposed on a surface of the positive electrode current collector, wherein a material of the positive electrode active layer comprises the positive electrode material according to any one of claims 1-4 or the positive electrode material prepared by the preparation method according to any one of claims 5-13, a conductive agent and a binder.

15. The positive electrode sheet according to claim 14, wherein the positive electrode sheet has an ultimate compaction density of 3.1 g/cm³ - 3.5 g/cm³.

16. The positive electrode sheet according to any one of claims 14-15, wherein the conductive agent is one or more of acetylene black, conductive carbon black, and conductive graphite.

17. The positive electrode sheet according to any one of claims 14-16, wherein the binder is one or more selected from polyvinylidene fluoride and N-methylpyrrolidone.

18. A sodium-ion battery, comprising the positive electrode material according to any one of claims 1-4, the positive electrode material prepared by the preparation method according to any one of claims 5-13, or the positive electrode sheet according to any one of claims 14-17.

19. The sodium-ion battery according to claim 18, further comprising a negative electrode sheet, an electrolyte, and a separator.
